# EUROPÄISCHE PATENTSCHRIFT

(11) **EP 2 625 447 B1**
(45) Veröffentlichungstag und Bekanntmachung des Hinweises auf die Patenterteilung: **08.04.2015**
(21) Anmeldenummer: 11801564.3
(22) Anmeldetag: 02.09.2011
(51) Int. Cl.: F16J 9/26, F16J 9/20

(54) **VERFAHREN ZUR HERSTELLUNG EINES KOLBENRINGS**
METHOD FOR PRODUCING A PISTON RING
PROCÉDÉ DE FABRICATION D'UN SEGMENT DE PISTON

(30) Priorität: 08.10.2010 DE 102010047961
(43) Veröffentlichungstag der Anmeldung: 14.08.2013
(73) Patentinhaber: Federal-Mogul Burscheid GmbH, 51399 Burscheid (DE)
(72) Erfinder: ESSER, Peter-Klaus, 51515 Kürten (DE); GILLEN, Jürgen, 51371 Leverkusen (DE)
(74) Vertreter: Döpp, Ludger
(86) Internationale Anmeldenummer: PCT/DE2011/001687
(87) Internationale Veröffentlichungsnummer: WO 2012/045295

(56) Entgegenhaltungen:
- WO-A1-2011/064888
- FR-A- 1 484 353
- GB-A- 1 441 961

## Beschreibung

Die Erfindung betrifft ein Verfahren zur Herstellung eines Kolbenrings gemäß gattungsbildendem Teil des ersten Patentanspruchs.

Kolbenringe werden vielfach aus Gusseisen, Stahlguss oder Stahldraht hergestellt. Derzeit werden u.a. Kolbenringe mit so genannten selbstschärfenden Abstreifkanten in Form von gekammerten Ringen mit Chromschichten eingesetzt.

Die DE 10 2007 007 961 A1 offenbart einen Kolbenring, mit einem Grundkörper, der eine im Wesentlichen umlaufende Lauffläche, eine obere und eine untere Flankenfläche sowie eine innere Umfangsfläche aufweist, wobei der Übergangsbereich der Lauffläche zumindest in die untere Flankenfläche mit einer Kante ≤ 0,1 mm versehen und die Lauffläche zumindest mit einer PVD-Deckschicht ≤ 10 mm versehen ist.

In der DE 103 59 802 B3 wird ein Kolbenring sowie ein Verfahren zur Herstellung desselben beschrieben. Der Kolbenring beinhaltet eine, mit einem Laufflächenprofil versehene Lauffläche sowie eine obere und eine untere Flankenfläche, wobei zumindest die Lauffläche mit einer Aufdampfschicht versehen ist, dergestalt, dass ein Teilbereich der Lauffläche mit einer entfernbaren Abdeckung versehen ist, so dass nach Erzeugung der Aufdampfschicht und Entfernung der Abdeckung eine im Wesentlichen scharfkantige Laufkante zwischen der Lauffläche und zumindest einer der Flankenflächen gegeben ist.

Der FR 1.484.253 ist ein gattungsgemäßes Verfahren zur Herstellung von Kolbenringen zu entnehmen.

Die GB 1441961 offenbart einen Kolbenring, der im Bereich seiner äußeren Lauffläche mit einer, harte und weiche Bestandteile aufweisenden, Laufflächenschicht versehen ist.

Der Erfindung liegt die Aufgabe zugrunde, ein alternatives Verfahren zur Erzeugung von mit einer PVD-Schicht versehenen Kolbenringen bereitzustellen, bei welchem der Kolbenring gegenüber dem Stand der Technik eine verbesserte Abstreifwirkung hat.

Diese Aufgabe wird dadurch gelöst, dass die Lauffläche mit einer PVD-Deckschicht versehen wird, wobei bei gegebener PVD-Deckschicht selbige, zur Bildung des Stegs, bis auf das Grundmaterial der Lauffläche abgetragen wird.

Vorteilhafte Weiterbildungen des erfindungsgemäßen Verfahrens sind den zugehörigen verfahrensgemäßen Unteransprüchen zu entnehmen.

Darüber hinaus wird ein Kompressionskolbenring mit einer selbstschärfenden Abstreifkante vorgeschlagen, der nach dem erfindungsgemäßen Verfahren hergestellt ist.

Mit dem erfindungsgemäßen Verfahren, nämlich der Erzeugung einer definierten Konizität im Bereich der Lauffläche in Wirkverbindung mit der mindestens einen verschleißfesten Schicht, kann eine Verbesserung der Abstreifwirkung des Kolbenrings, insbesondere des Kompressionskolbenrings, dergestalt erreicht werden, dass eine sich selbst schärfende Abstreifkante (Funktionskante) gebildet wird, welche nicht ausbruchgefährdet ist.

Je nach Einsatzbereich des Kolbenrings kann es sinnvoll sein, die Lauffläche mit einem so genannten Viellagenschichtsystem zu versehen. Derartige Systeme sind beispielsweise in der DE 10 2006 046 915 B3 beschrieben.

Die Konizität der Ringlauffläche wird vorteilhafterweise mechanisch in die Lauffläche eingebracht.

Die nach dem zylindrischen Bearbeiten freigelegte Stegbreite liegt, einem weiteren Gedanken der Erfindung gemäß, zwischen 0,05 und 0,45 mm.

Die zweckmäßigerweise erzeugten Laufflächenkonizitäten, beispielsweise zwischen 30 und 120 Minuten, werden vor der Beschichtung in die zu erzeugende Lauffläche eingebracht, wobei die Vorgehensweise unabhängig vom Ringmaterial ist.

Die Abstreifkante bei Gusseisenkolbenringen kann scharfkantig (90°) oder, je nach Anforderung, bis zu einem Radius von 0,1 mm abgerundet werden.

Bei Stahlringen kann der Bereich der Abstreifkante nitriert oder unnitriert ausgeführt werden. Bei nicht-nitrierter Ausführung kann die Abstreifkante scharfkantig (90°) ausgeführt werden.

Bei nitrierter Stahlringausführung kann es bedarfsweise folgende Ringausführungen geben:
- die Abstreifkante beinhaltet einen radialen Einzug < 0,1 mm, der Stahlsteg und die Lauffläche sind nitriert, wobei keine Nitrierschicht unterhalb der PVD-Deckschicht gegeben ist.
- die Abstreifkante wird mit einer Abschrägung < 0,15 mm versehen, der Stahlsteg und die Lauffläche sind nitriert, wobei in diesem Fall eine Nitrierschicht unterhalb der PVD-Deckschicht verbleibt.

Je nach Werkstoff und Anwendungsfall können somit Kolbenringe, insbesondere Kompressionskolbenringe, erzeugt werden, die mit mindestens einer verschleißfesten Schicht, vorzugsweise einer PVD-Schicht versehen sind.

Ist die PVD-Schicht bereits als Deckschicht anzusehen, wird selbige im Bereich der Abstreifkante bis auf das Grundmaterial etwa zylindrisch abgetragen, so dass ein Steg vorgebbarer Breite erzeugt wird.

Sind mehrere Verschleißschichten gegeben, so kann die PVD-Deckschicht entweder bis auf das Grundmaterial der Lauffläche abgeschliffen werden, oder aber lediglich so weit, dass mindestens eine verschleißfeste Schicht (beispielsweise eine Nitrierschicht) unterhalb der PVD-Deckschicht verbleibt.

Beiden Ausführungsformen gemein ist, dass in jedem Fall ein Steg mit definierter Breite im Bereich der scharfkantigen, gerundet oder mit einer Abschrägung versehenen Abstreifkante gebildet wird.

Der Erfindungsgegenstand ist anhand eines Ausführungsbeispiels in der Zeichnung dargestellt und wird wie folgt beschrieben. Es zeigen:
- Figur 1: Bildliche Darstellung zur Herstellung eines Kolbenrings;
- Figur 2: Darstellung unterschiedlicher Ausführungsformen eines, nach dem erfindungsgemäßen Verfahren hergestellten Kolbenrings;
- Figur 3: Darstellung eines zumindest partiell nitrierten und mit einer PVD-Deckschicht versehenen Kolbenrings.

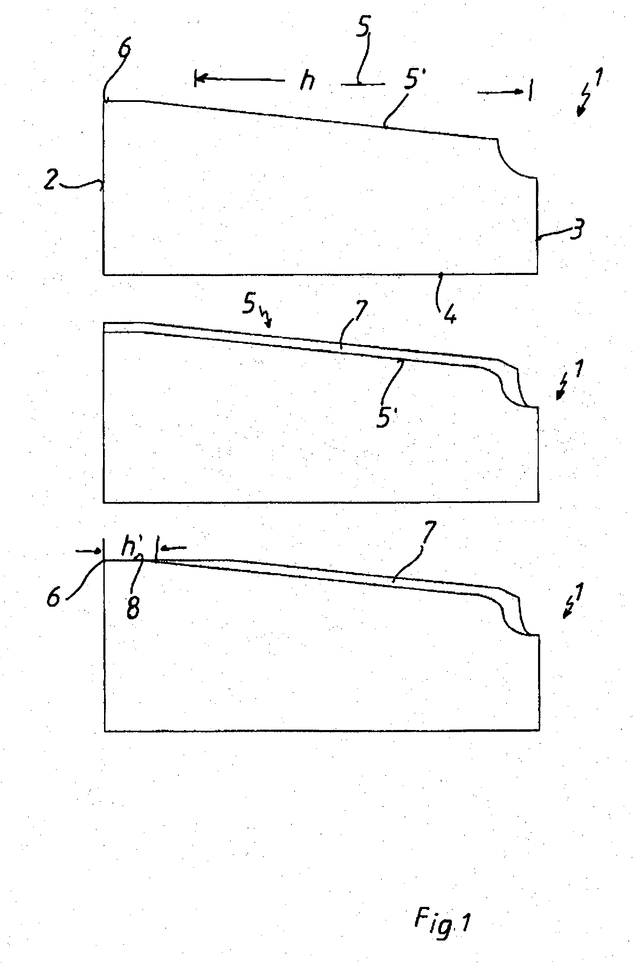

Figur 1 enthält drei Bilder. Das obere Bild zeigt in vergrößerter Darstellung einen Kolbenringgrundkörper 1, der, wie angedeutet, zunächst eine rechteckige Form hatte. Dieses Querschnittsprofil offenbart folgende Kolbenringbereiche: eine untere Flankenfläche 2, eine obere Flankenfläche 3, eine innere Umfangsfläche 4 sowie eine Lauffläche 5. Zur Erzeugung einer scharfkantigen Abstreifkante 6 (Funktionskante) wird in die Lauffläche 5 über eine vorgebbare Höhe h derselben eine Laufflächenkonizität 5' (beispielsweise 100 Minuten) mechanisch eingebracht. Im nachfolgenden Bild ist der Grundkörper 1 erkennbar, diesmal jedoch mit einer PVD-Deckschicht 7 versehen, die, entsprechend dem vorgegebenen Laufflächenprofil 5', auf der Lauffläche 5 abgeschieden wird.

Das untere Bild der Figur 1 zeigt, dass zur Erzeugung eines Steges 8 mit einer vorgegebenen Breite h' die PVD-Deckschicht 7 bis auf das Grundmaterial der Lauffläche 5 abgeschliffen wird. Durch diese Art der Bearbeitung wird die scharfkantige Abstreifkante 6 gebildet, die, durch den definierten Abstand h' zur PVD-Deckschicht 7, nicht ausbruchgefährdet ist und sich im Betriebszustand selbst schärft.

In Figur 1 ist dargestellt, dass die PVD-Schicht 7 als einzige verschleißfeste Schicht gleichzeitig die Deckschicht bildet.

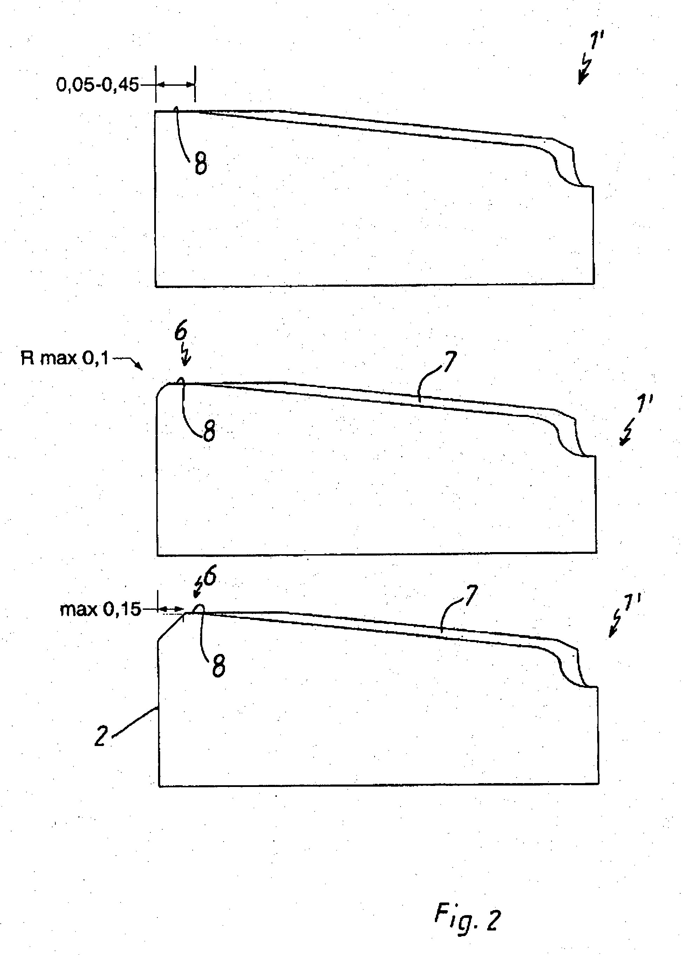

Figur 2 zeigt ebenfalls drei Bilder, wobei das obere Bild den fertigen Kolbenring 1' gemäß dem unteren Bild der Figur 1 darstellt. Die Breite des Steges 8 wird hierbei mit 0,05 bis 0,45 mm angegeben.

Je nach Werkstoffauswahl des Kolbenrings 1' kann es sinnvoll sein, im Bereich der Abstreifkante 6 des Kolbenrings 1' Radien oder Fasen (Abschrägungen) vorzugehen Das mittlere Bild zeigt einen Kolbenring 1' mit einem Radius von maximal 0,1 mm im Bereich der Abstreifkante 6.

Im unteren Bild der Figur 2 ist eine Fase/Abschrägung erkennbar, die unter einem Winkel in die untere Flankenfläche 2 einläuft. Die Stegbreite wird hierbei um maximal 0,15 mm reduziert.

Bei Stahlkolbenringen kann die Abstreifkante 6 nitriert oder unnitriert ausgeführt werden, wobei vorteilhafter bei nicht-nitrierter Ausführung die Abstreifkante 6 scharfkantig (90°) ausgeführt wird, wie dies im oberen Bild der Figur 2 dargestellt ist.

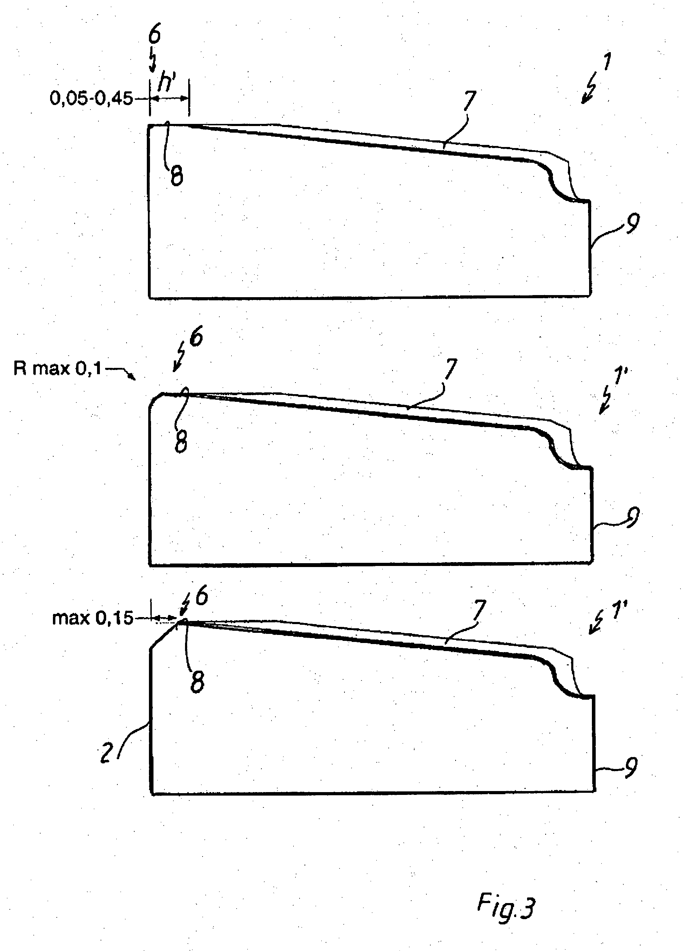

Figur 3 enthält ebenfalls drei Bilder, die von der Kontur her denjenigen der Figur 2 entsprechen. Unterschiedlich zu Figur 2 ist, dass der Steg 8 und die Lauffläche 5 nitriert werden, ehe die PVD-Deckschicht 7 aufgebracht wird. In diesem Fall soll der Abschleifvorgang der PVD-Schicht 7 so durchgeführt werden, dass die Nitrierschicht 9 stegseitig erhalten bleibt.

Bei nitrierten Stahlringausführungen können die in den weiteren Bildern der Figur 3 dargestellten Modifizierungen der Abstreifkante 6 vorgesehen werden. Dabei sind die Flankenflächen 2 und 3 sowie die Lauffläche 5 als auch die Umfangsfläche nitriert, ehe die PVD-Deckschicht 7 aufgebracht wird. Nach dem Abtragen der PVD-Deckschicht 7 im Bereich des Stegs 8 verbleibt keine Nitrierschicht unter der PVD-Deckschicht 7 (Bild 1 von Figur 3). Es ist aber auch denkbar, den Abtrag der PVD-Deckschicht 7 im Bereich des Stegs 8 so durchzuführen, dass eine gewünschte Nitrierung des Stegs 8 erhalten bleibt (Bild 2 und 3 von Figur 3).

## Patentansprüche

1. Verfahren zur Herstellung eines Kolbenrings (1'), indem ein metallischer Grundkörper (1), zumindest beinhaltend eine radial äußere Lauffläche (5), eine radial innere Umfangsfläche (4) sowie dazwischen verlaufenden oberen und unteren Flankenflächen (2,3) im Bereich einer etwa zylindrisch ausgebildeten Lauffläche (5) mit einer definierten Konizität (5') versehen wird, zumindest die Lauffläche (5) mit mindestens einer verschleißfesten Schicht (7) versehen wird und derjenige, eine Abstreifkante (6) bildende Bereich der mindestens einen Verschleißschicht (7) im Wesentlichen zylindrisch, einen Steg (8) vorgebbarer Breite (h') bildend, zumindest partiell abgetragen wird, **dadurch gekennzeichnet, dass** die Lauffläche (5) mit einer PVD-Deckschicht (7) versehen wird, wobei bei gegebener PVD-Deckschicht (7) selbige, zur Bildung des Stegs (8), bis auf das Grundmaterial der Lauffläche (5) abgetragen wird.

2. Verfahren nach Anspruch 1, **dadurch gekennzeichnet, dass** zumindest Teilbereiche der konisch ausgebildeten Lauffläche (5) nitriert und anschließend die Lauffläche (5) mit einer PVD-Deckschicht (7) versehen wird.

3. Verfahren nach Anspruch 1 oder 2, **dadurch gekennzeichnet, dass** der Bereich der Abstreifkante (6) in nicht-nitrierter oder nitrierter Form vorgesehen wird.

4. Verfahren nach einem der Ansprüche 1 bis 3, **dadurch gekennzeichnet, dass** die Abstreifkante (6) scharfkantig ausgebildet wird.

5. Verfahren nach einem der Ansprüche 1 bis 3, **dadurch gekennzeichnet, dass** die Abstreifkante (6) mit einer, in die zugehörige Flanke (2) unter einem Radius von max. 0,2 mm einlaufenden Rundung, ausgebildet wird.

6. Verfahren nach einem der Ansprüche 1 bis 3, **dadurch gekennzeichnet, dass** die Abstreifkante (6) mit einer, in die zugehörige Flanke (2) unter einem Winkel > 30° einlaufenden Abschrägung versehen wird.

7. Verfahren nach einem der Ansprüche 1 bis 6, **dadurch gekennzeichnet, dass** ein Grundkörper (1) aus Gusseisen, Stahlguss oder Stahldraht eingesetzt wird.

8. Kompressionskolbenring, hergestellt nach dem Verfahren gemäß einem der Ansprüche 1 bis 7.

## Claims

1. A method for manufacturing a piston ring (1'), in that a metallic base body (1) at least comprising a radial outer bearing surface (5), a radial inner circumferential surface (4) as well as upper and lower flank surfaces (2, 3) which extend between them is provided with a defined conicity (5') in the area of an approximately cylindrical bearing surface (5), at least the bearing surface (5) is provided with at least one wear-resistant layer (7) and such area of the at least one wear-resistant layer (7) which forms a strip edge (6) is at least partially removed in an essentially cylindrical way while forming a web (8) of pre-determinable width (h'), **characterized in that** the bearing surface (5) is provided with a PVD cover layer (7), wherein in case of a given PVD cover layer (7), the same one will be removed down to the basic material of the bearing surface (5) for forming the web (8).

2. A method according to claim 1, **characterized in that** at least partial areas of the conical bearing surface (5) are nitrated and afterwards the bearing surface is provided with a PVD cover layer (7).

3. A method according to claim 1 or 2, **characterized in that** the area of the strip edge (6) is provided in a non-nitrated or nitrated form.

4. A method according to one of the claims 1 through 3, **characterized in that** the strip edge (6) is made sharp-edged.

5. A method according to one of the claims 1 through 3, **characterized in that** the strip edge (6) is formed with a curvature that passes into the associated flank with a radius of maximum 0.2 mm.

6. A method according to one of the claims 1 through 3, **characterized in that** the strip edge (6) is provided with a bevel which passes into the associated flank (2) under an angle of > 30°.

7. A method according to one of the claims 1 through 6, **characterized in that** a base body (1) made of cast iron, steel cast or steel wire is used.

8. A compression piston ring, manufactured according to the method according to one of the claims 1 through 7.

## Revendications

1. Procédé de fabrication d'un segment de piston (1') en munissant un corps de base (1) métallique comprenant au moins une surface de glissement radiale extérieure (5), une surface circonférentielle radiale intérieure (4) ainsi que des surfaces de flanc supérieure et inférieure (2, 3) qui s'étendent entre elles d'une conicité définie (5') au niveau d'une surface de glissement (5) approximativement cylindrique, en munissant au moins la surface de glissement (5) d'au moins une couche résistante à l'usure (7) et en au moins partiellement enlevant, de manière essentiellement cylindrique, cette partie de l'au moins une couche résistante à l'usure (7) qui forme une arrête de raclage (6) de sorte que celle-ci forme une entretoise (8) de largeur pré-définissable (h'), **caractérisé en ce que** la surface de glissement (5) est munie d'une couche de couverture en PVD (7), et en cas d'une couche de couverture en PVD (7) donnée, la même sera enlevée jusqu'au matériau de fond de la surface de glissement (5) pour former une entretoise (8).

2. Procédé selon la revendication 1, **caractérisé en ce qu'**au moins des parties de la surface de glissement (5) conique sont nitrurées et la surface de glissement (5) est ensuite munie d'une couche de couverture en PVD (7).

3. Procédé selon la revendication 1 ou la revendication 2, **caractérisé en ce que** la zone de l'arrête de raclage (6) est prévue sous forme non-nitrurée ou sous forme nitrurée.

4. Procédé selon l'une des revendications 1 à 3, **caractérisé en ce que** l'arrête de raclage (6) est configurée comme une arrête acérée.

5. Procédé selon l'une des revendications 1 à 3, **caractérisé en ce que** l'arrête de raclage (6) est formée avec une courbure qui passe dans le flanc associé (2) avec un rayon de maximum 0,2 mm.

6. Procédé selon l'une des revendications 1 à 3, **caractérisé en ce que** l'arrête de raclage (6) est munie d'un biseau qui passe dans le flanc associé (2) sous un angle de > 30°.

7. Procédé selon l'une des revendications 1 à 6, **caractérisé en ce qu'**on utilise un corps de base (1) en fonte, en acier coulé ou en fil d'acier.

8. Segment de piston de compression fabriqué selon le procédé selon l'une des revendications 1 à 7.
